# EUROPÄISCHE PATENTANMELDUNG

(11) **EP 0 714 755 A1**
(43) Veröffentlichungstag der Anmeldung: **05.06.1996**
(21) Anmeldenummer: 94118019.2
(22) Anmeldetag: 15.11.1994
(51) Int. Cl.: B29C 70/02, B29C 70/66, D04H 1/52

(54) **Komprimierter Leichtfüllstoff für Duroplaste und Verfahren zu seiner Herstellung**

(71) Anmelder: Kölzer, Klaus Kurt, D-40593 Düsseldorf (DE)
(72) Erfinder: Kölzer, Klaus Kurt, D-40593 Düsseldorf (DE)

(57) **Zusammenfassung**

Leichtfüllstoff bestehend aus einer gebundenen, gewebten oder gewirkten, kurz-oder langfaserartigen Warenbahn, in welche thermoplastische Mikrohohlkugeln eingebettet sind. Diese volumisierte Faserbahn wird durch einen Näh- oder Nähwirkprozess mit Hilfe vorgespannter Nähfäden komprimiert. Hierbei werden durch die einstellbaren Fadenspannungen die zwischen den volumisierten Mikrokugeln befindlichen Hohlräume in genau berechenbarer Form reduziert.

## Beschreibung

Die Erfindung betrifft ein flächenartiges Leichfüllmaterial für Duroplaste, wie die klassischen Amino-Phenoplaste, Epoxidharze, Polyurethanharze, ungesättigte Polyesterharze und andere Reaktionsharze. Das Füllmaterial besteht aus einem faserartigen Flächengebilde in welches geschlossenzellige, thermoplastische Mikrohohlkugeln, auch _{"}Microspheres" genannt, eingebettet werden. Derartige Fasergebilde werden verwendet, um die Gebrauchs- und Festigkeitseigenschaften von Kunststoff-Formteilen zu erhöhen. Zur Reduzierung des Gewichtes von Kunststoff-Formteilen, ohne Verlust an mechanischer Festigkeit, sowie zur Verminderung des Harzanteils und des spezifischen Gewichtes, kann ein Teil des Harzes durch Fasergebilde, in welche Mikrohohlkugeln eingebettet sind, ersetzt werden.

Entsprechende flächenartige Füllmaterialien, bestehend aus Faserbahnen, die mit expandierten Mikrohohlkugeln angereichert werden, sind bekannt und in der DE-C-24 33 427, der US-A-3,3376,288 oder P 36 80 292.1-08 beschrieben. Bei diesen dort erwähnten Materialien werden faserartige Flächengebilde (Vliese, Filze, Gewebe, Gelege) bestehend aus organischen (zum Beispiel Polyester, Polyamid) oder anorganischen Fasern (zum Beispiel Glasfasern) mit einem bestimmen Volumenanteil aus thermoplastischen Mikrohohlkugeln gefüllt. Handelsübliche Mikrohohlkugeln bestehen zum Beispiel aus einem Polymer von Vinylidenchlorid oder aus Mischpolimerisaten wie beispielsweise Acrylnitril und-oder anderen Monomeren.

Die Einbringung der Mikrohohlkugeln in das faserartigen Flächengebilde erfolgt durch Imprägnierung oder Einschlämmung der ungeblähten, feinkörnigen Vorstufe dieser Kügelchen in Form einer wässerigen Dispersion in das flächenartige Fasermaterial. Das Imprägnieren kann in einem Tauchbad, einem Sprühprozess oder durch eine Schaumimprägnierung erfolgen. Die Menge der einzubringenden Mikrokügelchen, bezogen aufeine bestimmte Fläche, richtet sich nach der gewünschten Materialstärke des fertigen Flächengebildes. Bei handelsüblichen thermoplastischen Mikrohohlkugeln, die im ungeblähten Zustand eine Partikelgröße von ca. 5-20 und im geblähten Zustand von 20-100 Mikron haben, benötigt man ca. 8-15 gr per m² für eine Materialstärke von ca. 1 mm. Das derart imprägnierte Flächengebilde wird anschließend einem thermischen Prozeß unterzogen, bei welchem sowohl das in der Dispersion befindliche Wasser entfernt, als auch die zunächst ungeblähten Mikrokügelchen zur Expansion gebracht werden. Dieses spielt sich in Temperaturbereichen von ca. 100-150°C ab.

Dieses Aufblähen geschieht dadurch, daß ein in dem ungeblähten Mikrokügelchen enthaltenes Treibgas (zum Beispiel Isobutan) bei Temperatureinwirkung expandiert und das thermoplastische Material auseinandertreibt. Die Stärke der Expansion und der daraus resultierende Durchmesser der Mikrohohlkugel wird durch die Menge des eingebetteten Treibgases bestimmt. Die Expansion kommt dann zum Stehen, wenn das Treibgas aufgebraucht ist und sich der Innendruck der Mikrohohlkugeln und der Außendruck ausgeglichen haben. In der Regel entspricht der Außendruck dem atmosphärischen Druck. Das Resultat sind exakt kugelförmige, geschlossenzellige Hohlkörper mit einem Durchmesser von ca. 20 - 100 Mikron. Die Fixierung der Mikrohohlkugeln in dem faserartigen Flächengebilde kann durch ein Bindemitttel oder durch einen thermischen Sinterprozeß erfolgen.

Bei diesem Blähprozeß entstehen Kugelchen mit unterschiedlichen Durchmessern (20-100 Mikron), die sich dicht aneinanderlagern und entsprechend ihrer Siebfraktur und dem daraus resultierenden _{"}Packungsfaktor" ein bestimmtes Verhältnis zwischen dem Volumen der Hohlkugeln und dem zwischen diesen Hohlkugeln entstehenden offenen Räumen bilden, sofern die Expansion sich frei entfalten kann und nicht unter Druck erfolgt. Das so entstehende Gesamtvolumen kann nur unwesentlich beeinflußt werden und entspricht in etwa dem Schüttvolumen, wenn man die gleichen Hohlkugelchen lose in ein Gefäß schütten würde. In der Praxis beträgt das Volumen der offenen Räume zwischen den Kugeln ca. 50 - 80%. Hieraus resultiert die Menge an Harz, die nach dem Imprägnieren von dem oben beschriebenen Füllmaterials. aufgesaugt werden kann.

Derartige Füllmaterialien werden in der Praxis als sogenannte laminierbare Kernwerkstoffe verwendet, indem man diese Kernmaterialien mit außenliegenden Decklaminaten aus reinen Verstärkungsfasern aus Glas, Aramid, Karbon und dergl., die mit denselben Harzen imprägniert werden, kaschiert. Hierdurch entstehen sandwichartige faserverstärkte Formteile, deren hervorstechendes Merkmal hohe Festigkeiten bei geringem Gewicht ist. Da, wie oben bereits dargelegt, das Harz-Aufnähmevermögen derartiger Kernwerkstoffe jedoch durch das Produktionsverfahren des Leichtfüllmaterials und durch die Eigenschaften der Mikrohohlkugeln mehr oder weniger vorgegeben und nur in geringem Umfang beeinflußt werden kann, ist es nicht möglich bestimmte spezifische Gewichte, durch eine weitere Reduzierung des Harzanteiles zu unterschreiten.

Der Erfindung liegt die Aufgabe zugrunde, die vorhandenen, harzsaugenden Hohlräume in genau berechenbarer Größenordnung zu reduzieren, indem man die fertig volumisierte Faserbahn einem mechanischen Komprimierungsprozeß zuführt. Dies geschieht erfindungsgemäß dadurch daß die Warenbahn einem Nähwirkprozess unterzieht und durch miteinander vernetzte Nähfäden komprimiert und in dieser Komprimierung gehalten wird. Hiefür eignen sich handelsübliche Näh-oder Nähwirkmaschinen, die man zum Beispiel verwendet, um Nähgewirke herzustellen oder mehrlagige Warenbahnen durch Nähfäden miteinander zu verbinden

Die Komprimierung des volumisierten Fasermaterials ist nur möglich, wenn die Mikrohohlkugeln aus einem elastischen Kunststoff bestehen, der durch Druck deformiert werden kann. Da das Volumen der Hohlkügelchen nicht oder nur sehr unwesentlich durch Druck reduziert werden kann, kriechen Teile der deformierten Hohlkügelchen in die offenen Zwischenräume und reduzieren dieses Volumen. Dies bedeutet, daß bei einer Kompression eines mit Hohlkügelchen gefüllten Fasermaterials die Volumenreduzierung sich ausschließlich auf den Bereich der zwischen den Kugeln befindlichen Hohlräumen auswirkt.

Komprimiert man erfindungsgemäß ein mit Hohlkügelchen angereichertes Fasermaterial, mit einem angenommenen Volumenanteil von 50 % Hohlkugeln und einem angenommenen Gesamtvolumen von 100% auf 70%, so wirkt sich die Kompression von 30% nur auf den Anteil der 50%igen Hohlräume aus und reduziert diesen Teil um 2/3. Dies bedeutet, daß ein derart modifiziertes Material eine um 2/3 reduzierte Harzaufnahme gegenüber einem nicht komprimierten Material hat. Dies führt zu einer beträchtlichen Harz- Kosten- und Gewichtseinsparung.

Es ist bekannt, oben beschriebene Leichtfüllmaterialien durch einen Näh-oder Nähwirkprozess durch Kombination mit anderen Warenbahnen zum Beispiel aus Geweben. Gewirken oder Vliesen Zwei-oder mehrlagig zu Komplexen zu kombinieren, um dem Verarbeiter ein verarbeitungsfertiges Gelege zur Verfügung zu stellen, mit dem die Anzahl der Arbeitsgänge gegenüber der Verlegung von einzelnen Warenbahnen reduziert werden kann. Hierbei geht es jedoch nur um eine mechanische Fixierung der einzelnen Warenbahnen, die in der Regel möglichst locker sein soll, um die Drappierbarkeit bei sphärischen Verformungen nicht zu verschlechtern.

Nicht bekannt ist, daß ein Näh- oder Nähwirkprozess durch entsprechende Spannungen der Nähfäden benutzt wird, um eine mit Hohlkugeln angereicherte Faserbahn in genau berechenbarer Form zu komprimieren. Erfindungsgemäß werden die faserartigen Leichtfüllstoffe entweder unkomprimiert der Nähstation zugeführt und alleine durch eine einstellbare Vorspannung der Nähfäden zusammengepreßt oder unmittelbar vor der Nähstation mechanisch vorkomprimiert, wenn besonders hohe Komprimiergrade erreicht werden sollen. Die Praxis hat gezeigt, daß derart komprimierte faserartige Leichtfüllstoffe eine hervorragende Luft- und Harzdränage beibehalten obwohl durch die Pressung die Kapillaren verengt werden. Dies wird durch die senkrecht durch die Warenbahn gezogenen Nähkanäle und Nähfäden bewirkt, welche die Entlüftung fördern und den Harzfluß begünstigen. Dieser Effekt kann in dem Maße verbessert werden, in dem der Stichabstand der Nähfäden verringert wird. Es ist auch möglich, ein derart komprimiertes Leichtfüllmaterial aus zwei oder mehreren Lagen gleichartigen Materials oder aus Kombinationen mit Materialien unterschiedlichen Charakters herzustellen.

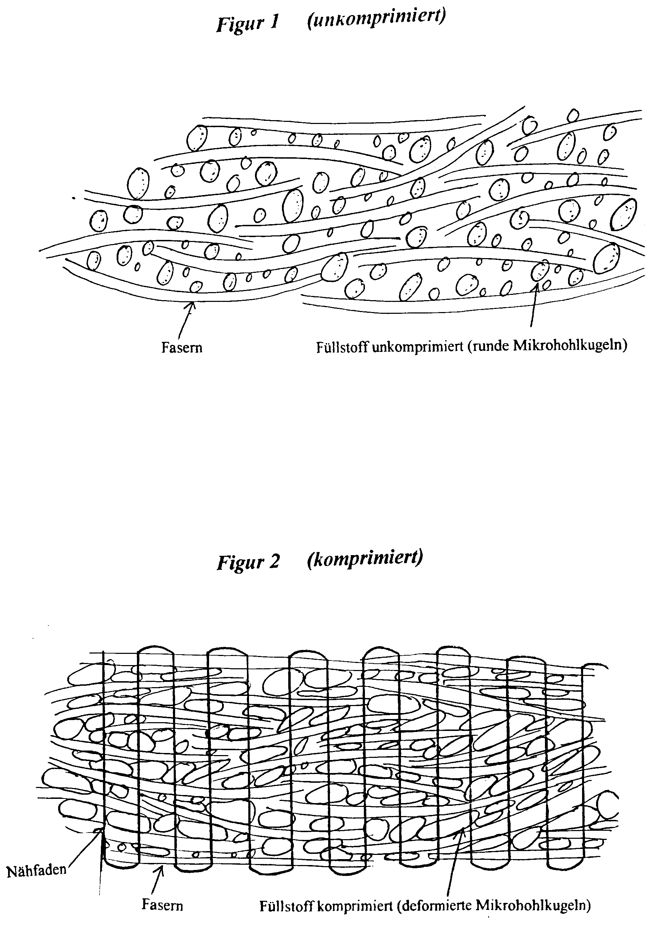

## Patentansprüche

1. Leichtfüllstoff enthaltend ein Trägermaterial aus organischen oder anorganischen Fasern, mit eingebetteten aus thermoplastischem Kunststoff bestehenden elastischen Mikrohohlkugeln, die mit Bindemitteln oder durch thermische Verklebung mit den Fasern verbunden und durch mechanische Kompression in seinem Ausgangsvolumen reduziert ist.

2. Leichtfüllstoff nach Anspruch 1 dadurch gekennzeichnet, daß das Trägermaterial aus einem Vlies, Filz, Gewebe, Gelege oder Gewirke mit Flächengewichten von 5 - 500 Gramm, vorzugsweise 20 - 100 Gramm besteht.

3. Leichtfüllstoff nach Anspruch 1 oder 2 dadurch gekennzeichnet, daß die Fasern aus Kurzfaser mit einer Länge von 2 - 70 mm, vorzugsweise 5 - 25 mm oder aus endlos gezogenen Elemetarfasern bestehen.

4. Leichtfüllstoff nach einem der Ansprüche 1 - 3, dadurch gekennzeichnet, daß die Fasern aus Hochmodulfaser, wie zum Beispiel aus Glasfasern, Karbonfasern, gestreckten PE-Fasern, Aramidfasern bestehen.

5. Leichtfüllstoff nach einem der Ansprüche 1 - 4, dadurch gekennzeichnet, daß die thermisch oder mit chemischen Bindemitteln herbeigeführte Bindung der Mikrohohlkugeln durch Monostyrol gelöst werden kann.

6. Leichtfüllstoff nach einem der Ansprüche 1 - 5, dadurch gekennzeichnet, daß die Bindung der Mikrohohlkugeln nicht in Monostyrol gelöst werden kann.

7. Leichtfüllstoff nach einem der Ansprüche 1 - 6, dadurch gekennzeichnet, daß das zum Beispiel aus einer Acrylatdispersion bestehende Bindemittel dem Leichtfüllstoff in einer Menge von 5 - 300 Gewichtsprozent der enthaltenen Hohlkugeln beigefügt wird, vorzugsweise 20 - 100 %.

8. Leichtfüllstoff nach einem der Ansprüche 1 - 7, dadurch gekennzeichnet, daß die Mikrohohlkugeln, mit einem Durchmesser von vorzugsweise 20 - 100 Mikron einen Gewichtsanteil von 3 - 40 Gramm, vorzugsweise 5 - 20 Gramm pro m² / pro Millimeter Materialstärke haben.

9. Leichtfüllstoff nach einem der Ansprüche 1 - 8, dadurch gekennzeichnet, daß bei dem unkomprimierten Material der Volumenanteil der Mikrohohlkugeln 10 - 60 % ausmacht.

10. Leichtfüllstoff nach einem der Ansprüche 1 - 9, dadurch gekennzeichnet, daß bei dem komprimierten Material der Volumenanteil der Mikrohohlkugeln 50 - 95 %, vorzugsweise 40 - 80 % ausmacht.

11. Leichtfüllstoff nach einem der Ansprüche 1 - 10, dadurch gekennzeichnet, daß das Material aus organischen oder anorganischen Nähfäden im Kompression gehalten wird.

12. Leichtfüllstoff nach einem der Ansprüche 1 - 11, dadurch gekennzeichnet, daß die erzeugten Nähte aus Einzelnnähten (zum Beispiel Fransenbindung) bestehen.

13. Leichtfüllstoff nach einem der Ansprüche 1 - 12, dadurch gekennzeichnet, daß die Nähfäden sich wechselweise kreuzen und die erzeugten Nähte gitter- oder netzartig miteinander verbunden sind. (zum Beispiel Trikotbindung)

14. Leichtfüllstoff nach einem der Ansprüche 1 - 13, dadurch gekennzeichnet, daß das unkomprimierte Vormaterial aus einer Lage besteht.

15. Leichtfüllstoff nach einem der Ansprüche 1 - 14, dadurch gekennzeichnet, daß das unkomprimierte Vormaterial aus 2 oder mehr Lagen besteht, die eine unterschiedliche Zusammensetzung der Qualität und des Flächengewichtes der Fasern und der Mikrohohlkugeln haben können.

16. Leichtfüllstoff nach einem der Ansprüche 1 - 15, dadurch gekennzeichnet, daß die Kompression des Materials 5 - 50 % vorzugsweise 10 - 30 % der Gesamtausgangsstärke beträgt.

17. Leichtfüllstoff nach einem der Ansprüche 1 - 16, dadurch gekennzeichnet, daß die Absorptionsfähigkeit von Flüssigkeiten wie zum Beispiel Kunstharzen, durch den Kompressionsvorgang von 100% Ausgangsquantität stufenlos bis auf 5 % reduziert werden kann vorzugsweise auf 20 - 70%

18. Leichtfüllstoff nach einem der Ansprüche 1 - 17, dadurch gekennzeichnet, daß das Material in komprimiertem Zustand eine Stärke von 2 - 50 mm vorzugsweise 10 - 30 mm hat.
